# EUROPÄISCHE PATENTANMELDUNG

(11) **EP 0 922 496 A2**
(43) Veröffentlichungstag der Anmeldung: **16.06.1999**
(21) Anmeldenummer: 98122048.6
(22) Anmeldetag: 20.11.1998
(51) Int. Cl.: B03B 9/06, B09B 3/00

(54) **Verfahren zur Aufbereitung von Abfall**

(30) Priorität: 12.12.1997 DE 19755223
(71) Anmelder: DEUTSCHE BABCOCK ANLAGEN GMBH, 46049 Oberhausen (DE)
(72) Erfinder: Stüve, Hajo, 47800 Krefeld (DE); Werning, Holger Dr., 47057 Duisburg (DE)
(74) Vertreter: Radünz, Ingo, Dipl.-Ing.

(57) **Zusammenfassung**

Abfälle in einer geeigneten Fraktion (0-50mm) und erwärmtes Wasser werden einem Mischer (2) kontinuierlich zugesetzt und dort zu einer homogenisierten, temperierten, pumpfähigen Suspension vermischt. Die Vermischung wird so durchgeführt, daß etwa in der Suspension enthaltene leichte und schwere, biologisch nicht abbaubare Störstoffe in der Suspension gehalten werden. Die homogenisierte Suspension wird dem Mischer (2) kontinuierlich entnommen und in einen Vergärungsbehälter (5) gepumpt. In dem Vergärungsbehälter (5) werden die leichten, aufschwimmenden sowie die schweren, absinkenden Störstoffe abgetrennt.

## Beschreibung

Die Erfindung betrifft ein Verfahren zur Aufbereitung von Abfall mit den Merkmalen des Oberbegriffes des Anspruches 1.

Der unsortierte bzw. vorsortierte und/oder zerkleinerte Abfall aus dem kommunalen und gewerblichen Bereich enthält noch leichte, aufschwimmbare Stoffe, wie Schaumstoffe und andere Plastikteile und schwere Stoffe, wie Sand oder Glasbruch, die bei der nachfolgenden biologischen Behandlung des Abfalls störend wirken, da sie nicht biologisch abbaubar sind. Für eine nasse Vergärung von organischen Abfallstoffe ist eine homogene Suspension erforderlich.

Aus der WO 89/00151 ist ein Reaktor für die nasse Vergärung von organischen Abfällen und die Herstellung von Biogas bekannt. In diesem Reaktor wird gleichzeitig die Vermischung der Abfälle eine Separation von leichten und schweren Störstoffen und die Vergärung der Abfälle durchgeführt. Die Vermischung und die Separation erfolgt über ein rotierendes Mischaggregat, das mit Gasdüsen und Schaufeln versehen ist. Von Nachteil ist dabei, daß durch die Verwendung des rotierenden Mischaggregates innerhalb des Reaktors zu starke Scherkräfte auf die zu vergärenden Suspension wirken, durch die es zu einer räumlichen Trennung der an dem Abbau beteiligten Organismen und damit zu einer Destabilisierung des biologischen Prozesses kommen kann.

Aus dem Fachbuch "Biologische Abfallbehandlung / Thomé-Kozmiensky. - Berlin : EF-Verlag für Energie- und Umwelttechnik, 1995, Seiten 418-421" ist Verfahren für die nasse Vergärung bekannt, bei dem die Abfälle in einem Aufbereitungsbehälter zu einer homogenen, pumpfähigen Suspension vermischt werden, die einem getrennten Gärbehälter zugeführt wird. Bei diesem bekannten Verfahren findet die Herstellung der homogenen Suspension und die Abtrennung der schweren und leichten Störstoffe aus der Suspension in dem gleichen Aggregat bei unterschiedlichen Rührgeschwindigkeiten statt (EP-PS 639 108). Hierdurch wird der Anmisch- und Abtrennvorgang zeitlich von dem Umpumpen der herstellten Suspension getrennt, was zu einem diskontinuierlichen Betrieb führt. Insbesondere bei großtechnischen Anlagen gewinnt das Zeitmanagement besondere Bedeutung, so daß eine gleichzeitige Anmaischung und Weiterförderung der Suspension erwünscht wäre. Nachteilig ist weiterhin, daß sich bei dem bekannten Verfahren im Verlauf des Gärprozesses die Dichte der Suspension ändert, wodurch nicht abbaubare Störstoffe separieren. Es fallen damit sowohl im Aufbereitungsbehälter beabsichtigt als auch im Gärbehälter verfahrensbedingt Störstoffe aus.

Der Erfindung liegt die Aufgabe zugrunde, das gattungsgemäße Verfahren so abzuwandeln, daß ein kontinuierlicher Betrieb möglich ist und daß die Störstoffe einfacher aus dem Prozeß zu entfernen sind.

Diese Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind in den Unteransprüchen angegeben.

Bei dem erfindungsgemäßen Verfahren wird bewußt auf eine Separation der Störstoffe während der Aufbereitung der Suspension verzichtet und ein kontinuierlicher Betrieb herbeigeführt. Die Störstoffe fallen jeweils bevorzugt an einem Punkt an und können von dort besser abgeführt und nachbehandelt werden. In vorteilhafter Ausgestaltung gemäß den Ansprüchen 2 und 3 können die abgeschiedenen Schwerstoffe soweit von organischen Bestandteilen befreit werden, daß sie auf einer Deponie abzulagern sind. Diese Behandlung der Schwerstoffe ist in das System der Anmaischung, Separation und Vergärung eingebunden.

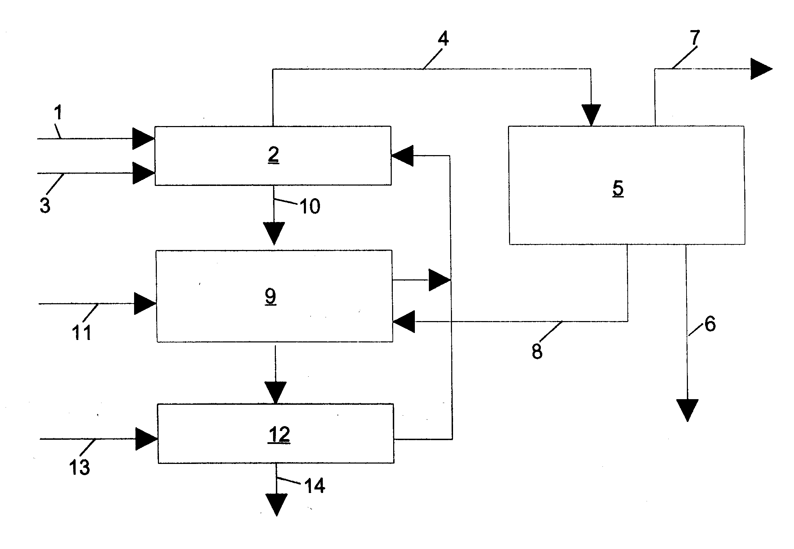

Ein Ausführungsbeispiel der Erfindung ist in der Zeichnung dargestellt und wird im folgenden näher erläutert. Die Zeichnung stellt Schema eines Verfahrens zur Aufbereitung von Abfällen dar.

Aus dem kommunalen oder gewerblichen Bereich stammende, getrennt oder nicht getrennt gesammelte Abfälle, die nennenswerte Anteile nativ-organischer Substanzen enthalten und damit prinzipiell vergärungsfähig sind, werden durch mechanische Aufbereitungsschritte, wie beispielsweise Zerkleinerung, Siebung, Sichtung so aufbereitet, daß eine Fraktion mit einer Korngrößenverteilung von 0 mm bis 50 mm entsteht. Die so vorbehandelten und fraktionierten Abfälle werden kontinuierlich über eine Leitung 1 in einen nur schematisch dargestellten Mischer 2 dosiert, der mit einem Mischaggregat versehen ist. Proportional zu der dosierten Abfallmenge wird in Abhängigkeit von dem Trockensubstanzgehalt der Abfälle Prozeß-, Brauch-, oder Frischwasser über eine Leitung 3 dosiert in den Mischer 2 eingespeist. Das Wasser ist auf 35 bis 80 °C erwärmt.

In dem Mischer 2 wird durch Rühren eine homogenisierte, temperierte, pumpfähige Abfallsuspension mit einem definierten Trockensubstanzgehalt von 8 bis 25 Gew.% hergestellt. Die Vermischung der Ausgangsstoffe in dem Mischer 2 soll so vollständig erfolgen, daß im Mischer 2 keine Stoffe separieren und die im Abfall vorhandenen schweren und leichten, biologisch nicht abbaubaren Störstoffe in der Suspension gehalten werden. Dies wird durch die Einstellung des Trockensubstanzgehaltes und/oder durch eine intensive Rührbewegung erreicht.

Der in dem Mischer 2 kontinuierlich hergestellte homogene Suspensionsstrom wird kontinuierlich über eine Leitung 4 in einen Gärbehälter 5 gepumpt. In dem Gärbehälter 5 findet unter Luftabschluß und in Anwesenheit von Mikroorganismen eine Vergärung der Abfallsuspension statt. Die dabei anfallende ausgegorene Gärsuspension wird über einen Auslaß 6 abgezogen und einer aeroben Weiterbehandlung zugeführt.

Mit der homogenen Abfallsuspension gelangen auch die schweren und die leichten Störstoffe aus dem Mischer 2 in den Gärbehälter 5. In dem Gärbehälter 5 findet die erforderliche Abtrennung der leichten, aufschwimmenden und der schweren, absinkenden Störstoffen statt. Die leichten Störstoffe sammeln sich an der Oberfläche der Gärsuspension und werden mittels einer Abschöpfvorrichtung von der Oberfläche abgeschöpft, über eine Leitung 7 abgezogen und einer Weiterverwertung zugeführt. Die schweren Störstoffe sammeln sich aufgrund der höheren Dichte in dem unteren als Konus ausgebildeten Teil des Gärbehälters 5 und werden von dort aus chargenweise über eine Feststoffleitung 8 in einen Feststoffabscheider 9 abgeführt. Der Feststoffabscheider 9 dient auch als Zwischenbunker für Schwerstoff.

In den Abfällen können Schwerstoffe enthalten sein, die sich trotz intensiven Rührens oder der Einstellung eines Mindestgehaltes an Trockensubstanz in dem Mischer 2 nicht in die Suspension einbringen lassen oder in dem Mischer 2 separieren. Diese Schwerstoffe können während des laufenden Betriebes durch einen Notablaß 10 und eine Schleuse in den Feststoffabscheider 9 entlassen werden, dem auch die in dem Gärbehälter 5 abgetrennten Schwerstoffe zugeführt werden.

Der Feststoffabscheider 9 wird bei Bedarf über eine Leitung 11 mit Prozeß-, Brauch- oder Frischwasser beaufschlagt, um die Schwerstoffe aus dem Gärbehälter 5 und gegebenenfalls aus dem Mischer 2 aufzuspülen und organische Substanzen in einem ersten Spülschritt abzutrennen. Die aufgespülten Schwerstoffe tropfen im Feststoffabscheider 9 ab und werden in einen chargenweise arbeitenden Aufstromklassierer 12 gegeben. In dem Aufstromklassierer 12 werden die Schwerstoffe mit Prozeß-, Brauch- oder Frischwasser, das über die Leitung 13 zugeführt wird, im Aufstrom von unten intensiv gespült und dadurch von einem sehr großen Anteil der anhaftenden, organischen Substanzen befreit. Die so gereinigten Schwerstoffe verlassen den Aufstromklassierer 12 über einen Auslaß 14 und sind gemäß den gesetzlichen Vorschriften deponierfähig oder können anderweitig z. B. im Straßenbau verwendet werden. Die verwendeten Spülwässer aus dem Feststoffabscheider 9 und dem Aufstromklassierer 12 werden dem Prozeß zurückgeführt, indem sie über eine Rückführleitung 15 in den Mischer 2 zurückgeleitet werden.

## Patentansprüche

1. Verfahren zur Aufbereitung von Abfällen, wobei die Abfälle in eine der Korngröße und Zusammensetzung nach geeignete Fraktion (0 - 50 mm) überführt werden, diese Fraktion in einem Mischer mit erwärmten Prozeß-, Brauch- oder Frischwasser zu einer homogenisierten, temperierten, pumpfähigen Suspension vermischt wird und diese Suspension einer biologischen Nachbehandlung unterworfen wird, dadurch gekennzeichnet, daß die Abfälle sowie das Wasser dem Mischer kontinuierlich zugesetzt werden, daß die homogenisierte Suspension dem Mischer kontinuierlich entnommen wird, daß die Vermischung so durchgeführt wird, daß etwa in der Suspension enthaltene leichte und schwere, biologisch nicht abbaubare Störstoffe in der Suspension gehalten werden, daß die den Mischer kontinuierlich verlassende Suspension in einen Vergärungsbehälter gepumpt wird, und daß in dem Vergärungsbehälter die leichten, aufschwimmenden sowie die schweren, absinkenden Störstoffe abgetrennt werden.

2. Verfahren nach Anspruch 1, dadurch gekennzeichnet, daß die schweren Störstoffe aus dem Vergärungsbehälter und ggf. aus dem Mischer einer Schwerstoffabtrennung zugeführt, in der Schwerstoffabtrennung mit Prozeß-, Brauch- oder Frischwasser aufgespült und anschließend von dem Wasser durch Abtropfen teilweise getrennt werden und daß die so behandelten schweren Störstoffe einem Aufstromklassierer zugeführt werden.

3. Verfahren nach Anspruch 1 oder 2, dadurch gekennzeichnet, daß die schweren Störstoffe in dem Aufstromklassierer mit Prozeß-, Brauch- oder Frischwasser von unten intensiv gespült und dadurch von den anhaftenden organischen Bestandteilen befreit werden, und daß das verbrauchte Spülwasser dem Mischer zugeführt wird.
